# EUROPÄISCHE PATENTSCHRIFT

(11) **EP 1 452 903 B1**
(45) Veröffentlichungstag und Bekanntmachung des Hinweises auf die Patenterteilung: **06.05.2015**
(21) Anmeldenummer: 03104403.5
(22) Anmeldetag: 27.11.2003
(51) Int. Cl.: G02F 1/1335, G02F 1/1347, G02F 1/13363, G02F 1/139

(54) **Flüssigkristallanzeige**
Liquid crystal display
Dispositif d'affichage à cristaux liquides

(30) Priorität: 23.12.2002 DE 10260692
(43) Veröffentlichungstag der Anmeldung: 01.09.2004
(73) Patentinhaber: Continental Automotive GmbH, 30165 Hannover (DE)
(72) Erfinder: Brandt, Peter, 63739 Ascahffenburg (DE); Janssen, Hermann, 63741 Aschaffenburg (DE); Noll, Heinrich, Dr., 64823 Gross-Umstadt (DE); Tippl, Dietmar, 63110 Rodgau-Dudenhofen (DE)

(56) Entgegenhaltungen:
- EP-A- 1 026 541
- WO-A-02/11214
- US-A- 5 136 406
- US-A1- 2002 080 301
- US-A1- 2002 113 192
- US-B1- 6 255 670
- INTERNATIONAL BUSINESS MACHINES CORPORATION: "A backlighting unit with adjustable color point" RESEARCH DISCLOSURE, KENNETH MASON PUBLICATIONS, HAMPSHIRE, GB, Bd. 413, Nr. 141, September 1998 (1998-09), XP007123356 ISSN: 0374-4353

## Beschreibung

Die Erfindung bezieht sich auf eine Flüssigkristallanzeige zur Darstellung von hellen Zeichen und Mustern in einem dunklen Umfeld, mit einer ersten Super-Twisted-Nematik-Zelle (STN) und einer zweiten Super-Twisted-Nematik-Zelle (STN), die aneinander anliegend zwischen zwei unter etwa 90° zueinander ausgerichteten Polarisatoren angeordnet sind, aus transparenten Substraten bestehen, zwischen denen mit einer TN-Flüssigkristallsubstanz, insbesondere eine STN-Flüssigkristallsubstanz gefüllte Zellenräume gebildet sind und die von ihrer einem Beobachter abgewandten Seite her von einer Lichtquelle durchleuchtbar sind, wobei die erste Super-Twisted-Nematik-Zelle auf ihren Substraten einander gegenüberliegende Elektroden aufweist, die von einer Ansteuerspannung beaufschlagbar sind und wobei die erste und zweite Super-Twisted-Nematic-Zelle eine Doppel-Super-Twisted-Nematic-Zelle bilden, die einen steilen Anstieg ihrer Transmissionskurve im blauen Bereich des Lichtspektrums besitzt.

Der Steile Anstieg der Transmissionskurve derartiger Doppel-Super-Twisted-Nematc-Zellen ist in seiner Lage sowohl temperatur- als auch ansteuerspannungsabhängig. So verläuft der steile Anstieg der Transmissionskurve bei höheren Temperaturen auf einem niedrigeren Wellenlängenniveau als bei niedrigeren Temperaturen. Wird die Zelle von einer Lichtemissionsdiode mit weißem Licht durchleuchtet, besitzt deren Lichtspektrum mehrere Spitzenwellenlängen, von denen sich eine ausgeprägte Spitzenwellenlänge im blauen und eine im gelbgrünen Bereich des Lichtspektrums befindet. Durch die Verschiebung des steilen Anstiegs der Transmissionskurve der Zelle verändert sich bei Temperaturveränderung auch das Intensitätsverhältnis der blauen zur gelbgrünen Spitzenwellenlänge der ansich weißes Licht emittierenden Lichtemissionsdiode und damit auch die Farbe des emittierten Lichts. Bei tiefen Temperaturen erscheint die Flüssigkristallanzeige gelbgrünlicher als bei hohen Temperaturen.

Um bei weißer Beleuchtung auch eine neutrale Transmissionsfarbe der angesteuerten Zeichen und Muster zu erhalten, ist es bekannt die erste Super-Twisted-Nematik-Zelle mit einer relativ niedrigen Ansteuerspannung anzusteuern. Dies führt nachteiligerweise aber zu langen Schaltzeiten. Sollen schnell sich ändernde Informationen wie z.B. eine Geschwindigkeitsanzeige in einem Kraftfahrzeug dargestellt werden, ist dies aufgrund der langen Schaltzeiten nicht möglich.

Aufgabe der Erfindung ist es daher eine Flüssigkristallanzeige der eingangs genannten Art zu schaffen, durch die über einen großen Temperaturbereich weitgehend verzögerungsfrei wechselnde Informationen in zumindest weitgehend unveränderlicher weißer Farbe in einem dunklen Umfeld kontrastreich darstellbar sind.

Diese Aufgabe wird erfindungsgemäß dadurch gelöst, daß die Elektroden von einer eine etwa völlige Durchschaltung der Helix der Flüssigkristallsubstanz bewirkenden hohen Ansteuerspannung beaufschlagbar sind und die Lichtquelle eine weißes Licht mit einem Blauanteil emittierende Lichtquelle ist.

Die hohe Ansteuerspannung führt zu einer schnellen Reaktion der angesteuerten Bereiche und somit zu einem guten dynamischen Verhalten der Anzeige.

Die gelbe Eigenfarbe der zweiten Zelle wird durch den erhöhten Blauanteil in der Spektralverteilung des Lichts der Lichtquelle ausgeglichen, so daß die angesteuerten Zeichen und Muster dem Beobachter in weißer Farbe erscheinen.

Die zweite Zelle sorgt in Verbindung mit der ersten Zelle dafür, daß in einem Temperaturbereich von etwa minus 30° bis plus 85° das Umfeld der angesteuerten Zeichen und Muster nicht grau sondern dunkel ist. Damit wird auf einfache Weise eine hochdynamische Anzeige hohen Kontrasts mit weißem Licht in dunklem Umfeld erreicht.

Besteht die Lichtquelle aus einer oder mehreren Lichtemissionsdioden (LED's), so ist dazu nur ein geringer Bauraum erforderlich und eine Wärmebelastung durch die Lichtquelle weitgehend vermieden.

Um den Ausgleich der Färbung der Flüssigkristallanzeige variieren zu können, kann die Ansteuerspannung variabel einstellbar sein.

Dies kann je nach dem subjektiven Empfinden des Beobachters dadurch erfolgen, daß die Ansteuerspannung manuell einstellbar ist.

Eine selbsttätige Farbkompensation der temperaturabhängigen Eigenfarbe der zweiten Zelle ist dadurch möglich, daß die Ansteuerspannung von einer Regeleinheit einstellbar ist, der ein Farbsignal eines die Farbe der dargestellten Zeichen und Muster erfassenden Sensors zuleitbar ist.

Eine weitere Lösung der Aufgabe besteht darin, daß die Lichtquelle eine ultraviolettes Licht emittierende Lichtemissionsdiode (LED) ist und eine Wellenlängenumwandlungseinrichtung zur Aufnahme und Umwandlung des Lichts der Lichtemissionsdiode in eine zusammengesetzte weiße Lichtstrahlung mit einer etwa kontinuierlichen, breitbandigen spektralen Lichtverteilung im blauen Bereich des Lichtspektrums aufweist.

Durch die etwa kontinuierliche, breitbandige spektrale Lichtverteilung im blauen Bereich des Lichtspektrums kommt es bei einer temperaturbedingten Verschiebung der Transmissionskurve und damit auch deren steilem Anstieg zu keiner wesentlichen Veränderung des Intensitätsverhältnisses der blauen zur gelbgrünen Spitzenwellenlänge, was ebenfalls die Farbe der darzustellenden Informationen weitestgehend unverändert weiß läßt.

Ein einfacher Aufbau wird dadurch erreicht, daß die Wellenlängenumwandlungseinrichtung ein erstes Fluoreszenzmaterial aufweist, das die Lichtstrahlung der Lichtemissionsdiode in eine zweite Lichtstrahlung mit einer zweiten Spitzenwellenlänge in dem blauen Bereich des Lichtspektrums umwandelt und daß die Wellenlängenumwandlungseinrichtung zumindest ein weiteres Fluoreszenzmaterial aufweist, das die Lichtstrahlung der Lichtemissionsdiode in eine weitere Lichtstrahlung mit einer weiteren Spitzenwellenlänge in einem weiteren Bereich des blauen Bereichs des Lichtspektrums umwandelt, wobei die Spitzenwerte ersten und die weiteren Spitzenwellenlänge etwa gleiche Größe besitzen und die zusammengesetzte Lichtstrahlung durch die zweite und die weitere Lichtstrahlung gebildet ist.

Dabei kann das erste Fluoreszenzmaterial aus einem ersten Phosphorgemisch und das weitere Fluoreszenzmaterial aus einem weiteren Phosphorgemisch gebildet sein.

Dabei ist vorzugsweise die zweite und/oder die weitere Lichtstrahlung breitbandig.

Eine besonders gut kontinuierlich breitbandige Lichtverteilung im blauen Bereich des Lichtspektrums wird dadurch erreicht, daß die Wellenlängenumwandlungseinrichtung ein aus einem dritten Phosphorgemisch gebildetes drittes Fluoreszenzmaterial aufweist. Natürlich können auch mehr als drei verschiedene Fluoreszenzmaterialien angewandt werden.

Eine besonders gute weiße Farbstabilität bei weitgehend verzögerungsfreier Darstellung der wechselnden Informationen erhält man, wenn sowohl die Maßnahmen gemäß des Anspruchs 1 als auch des Anspruchs 6 angewandt werden.

US 5 136 406 offenbart alle Merkmale des Oberbegriffs von Anspruch 1.

Ein Ausführungsbeispiel der Erfindung ist in der Zeichnung dargestellt und wird im folgenden näher beschrieben. Es zeigen
- Figur 1: eine prinzipielle Querschnittsansicht einer als Doppel-Super-Twisted-Nematic-Zelle ausgebildeten Flüssigkristallanzeige
- Figur 2: ein Diagramm der Transmission über der Ansteuerspannung.
- Figur 3: ein Diagramm der Transmission über der Wellenlänge der Flüssigkristallzelle nach Figur 1
- Figur 4: eine Spektralstrahlung einer herkömmlichen Lichtemissionsdiode und der Flüssigkristallzelle nach Figur 1 in kaltem Zustand
- Figur 5: eine Spektralstrahlung von Lichtemissionsdiode und Flüssigkristallzelle nach Figur 3 in warmem Zustand
- Figur 6: eine Spektralstrahlung einer eine Wellenlängenumwandlungseinrichtung aufweisenden Lichtemissionsdiode.

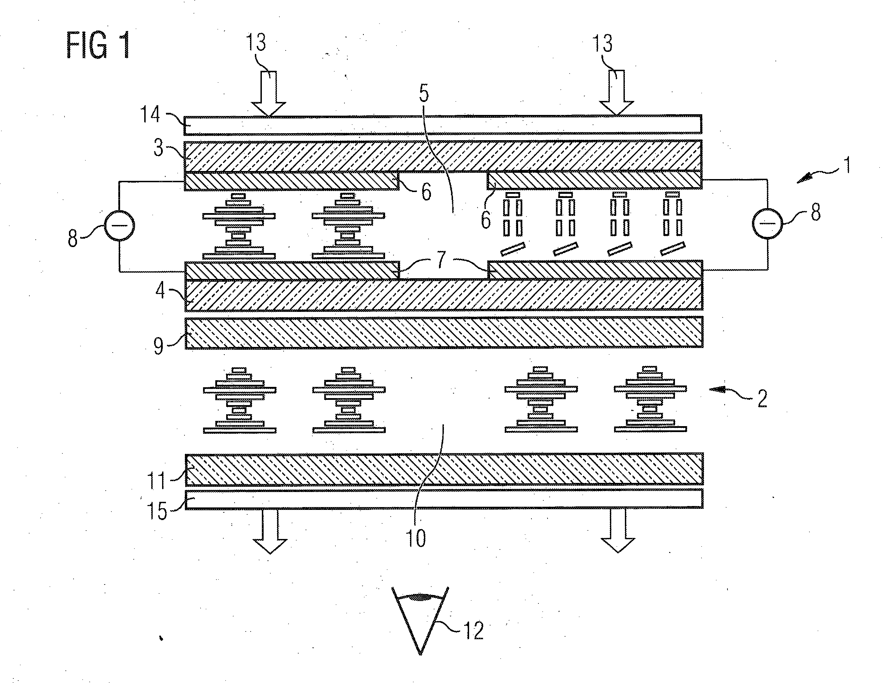

Die in Figur 1 dargestellte Flüssigkristallanzeige besteht aus einer ersten Super-Twisted-Nematik-Zelle 1 und einer zweiten Super-Twisted-Nematik-Zelle 2, die in Beobachtungsrichtung hintereinander angeordnet sind und eine Doppel-Super-Twisted-Nematic-Zelle bilden. Die erste Zelle 1 besitzt zwei im Abstand zueinander angeordnete transparente Substrate 3 und 4, die insbesondere aus Glas bestehen.

Der zwischen den Substraten 3 und 4 gebildete Zellenraum 5 ist mit einer STN-Flüssigkristallsubstanz gefüllt.

In dem Zellenraum 5 sind auf den Substraten 3 und 4 einander gegenüberliegend Paare von Elektroden 6 und 7 angeordnet, die durch eine Ansteuerspannung einer Spannungsquelle 8 beaufschlagbar sind.

Die zweite Zelle 2 ist eine passive Zelle, die aus weiteren transparenten Substraten 9 und 11 gebildet ist, welche ebenfalls aus Glas bestehen können. Der zwischen den Substraten 9 und 11 gebildete Zellenraum 10 ist ebenfalls mit einer STN-Flüssigkristallsubstanz gefüllt.

Sowohl auf der einem Beobachter 12 abgewandten Seite der ersten Zelle 1 als auch auf der dem Beobachter 12 zugewandten Seite der zweiten Zelle 2 ist ein Polarisator 14 und 15 angeordnet, die unter 90° zueinander ausgerichtet sind.

Auf der dem Beobachter 12 abgewandten Seite der ersten Zelle 1 sind Lichtquellen 13 angeordnet, deren Licht im Bereich des spannungsbeaufschlagten rechten Elektrodenpaars 6 und 7 durch die erste Zelle 1 und die zweite Zelle 2 zur Seite des Beobachters 12 hindurchtreten kann.

Das linke Elektrodenpaar 6 und 7 ist momentan nicht spannungsbeaufschlagt und sperrt somit den Lichtdurchtritt.

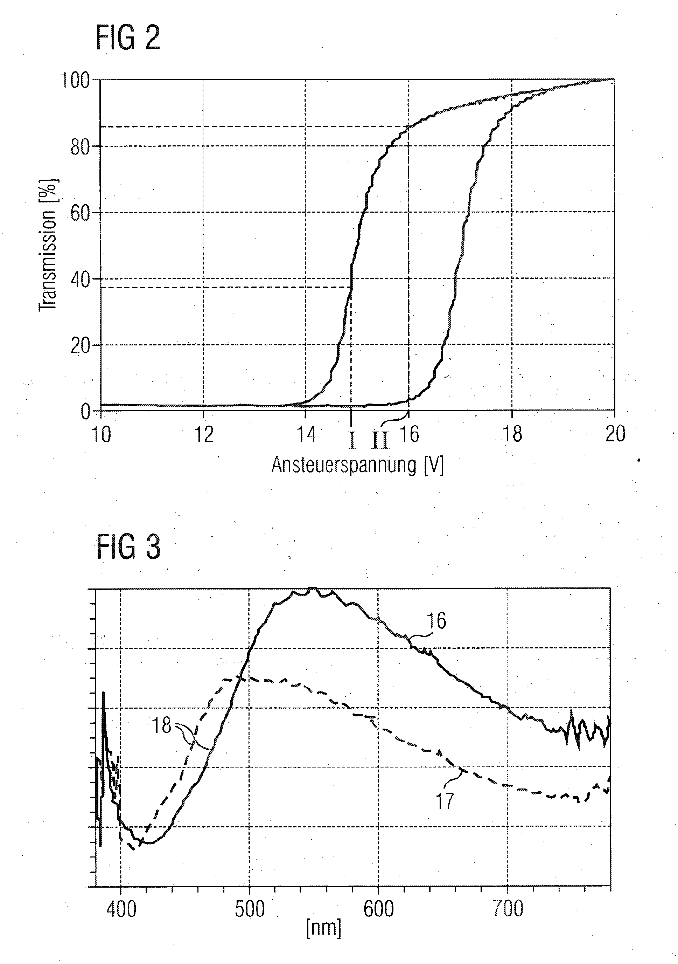

In Figur 2 ist in einem Diagramm die Transmission über der Ansteuerspannung der Elektroden 6 und 7 der Flüssigkristallanzeige dargestellt.

Der Punkt I der Spannungskurve zeigt die maximale Ansteuerspannung, bevor der Bereich des angesteuerten Elektrodenpaares 6 und 7 der ersten Zelle 1 bei herkömmlicher weißer Beleuchtung gelb wird.

Der Punkt 2 der Spannungskurve zeigt die Ansteuerspannung, mit der bei erfindungsgemäßer Beleuchtung eine Ansteuerung des Elektrodenpaares 6 und 7 erfolgen kann und trotzdem das angesteuerte Muster für den Beobachter in weißer Farbe erscheint.

Das in Figur 1 dargestellte Diagramm zeigt eine erste Transmissionskurve 16 und eine zweite Transmissionskurve 17 der Flüssigkristallzelle nach Figur 1 über der Wellenlänge. Dabei zeigt die Transmissionskurve 16 die Transmission bei kalter und die Transmissionskurve 17 die Transmission bei warmer Flüssigkristallzelle.

Die Transmissionskurven 16 und 17 besitzen im blauen Bereich des Lichtspektrums von etwa 420 bis 480 nm einen steilen Anstieg 18. Wie deutlich zu sehen ist, kommt es bei Erkalten der warmen Flüssigkristallzelle zu einer Verschiebung der Transmissionskurve zu einer höheren Wellenlänge.

Eine herkömmliche Lichtemissionsdiode zur Erzeugung weißen Lichts auf Basis einer blauen Lichtemissionsdiode besitzt eine ausgeprägte Spitzenwellenlänge im blauen Bereich von etwa 420 bis 480 nm nahe unterhalb des Anstiegs 18 der Transmissionskurven 16 und 17 und eine ausgeprägte Spitzenwellenlänge im gelbgrünen Bereich von etwa 620 nm.

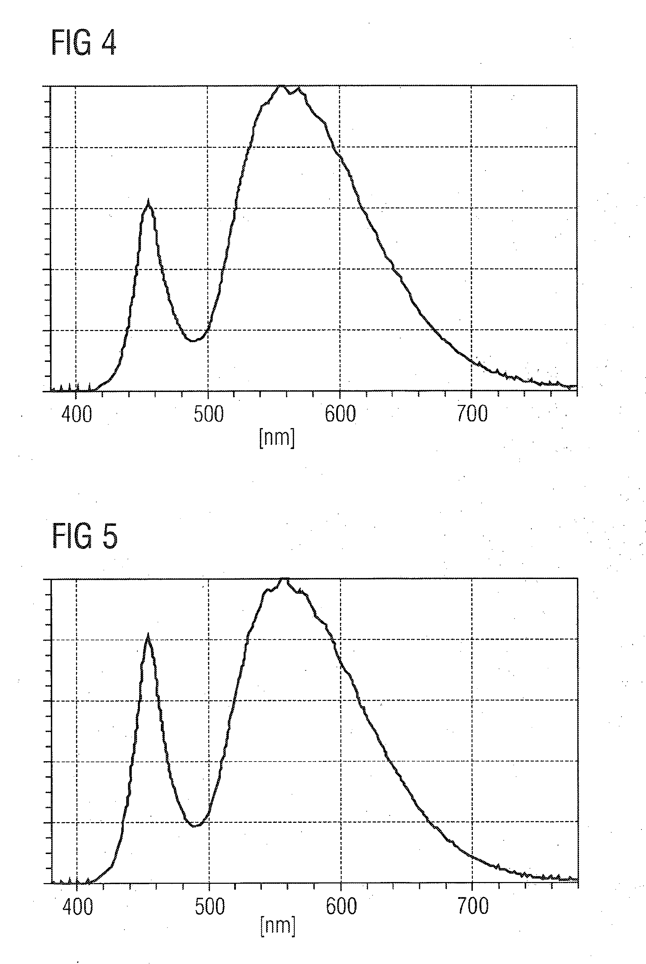

Da es bei Temperaturreduzierung zu einer Verschiebung der Transmissionskurve zu einer höheren Wellenlänge kommt, verändert sich das Intensitätsverhältnis blauer zu gelbgrüner Spitzenwellenlänge und somit die Farbe. Bei tieferen Temperaturen erscheint die Darstellung der Flüssigkristallzelle gelbgrünlicher als bei höheren Temperaturen. Dies ist auch an den in den Figuren 4 und 5 dargestellten Spektralstrahlungen der Flüssigkristallzelle bei warmem (Figur 5) und kaltem (Figur 4) Zustand zu erkennen, so daß im kalten Zustand die Transmission im Bereich der blauen Spitzenwellenlänge geringer und die Transmission im gelbgrünen Bereich höher wird.

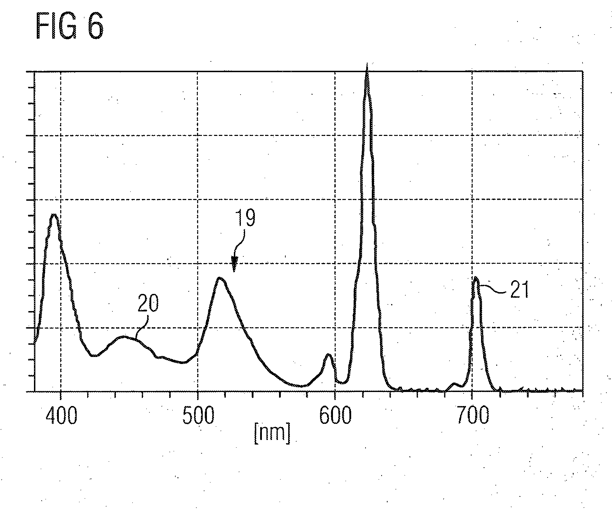

Figur 6 zeigt die Spektralstrahlung 19 einer ultraviolettes Licht erzeugenden Lichtemissionsdiode, die eine Wellenlängenumwandlungseinrichtung zur Erzeugung weißen Lichts aufweist. Diese Wellenlängenumwandlungseinrichtung weist ein erstes, ein zweites und ein drittes Fluoreszenzmaterial auf, welche aus einem ersten, einem zweiten und einem dritten Phosphorgemisch gebildet sind. Diese Fluoreszenzmaterialien sind so gewählt, daß es mehrere Spitzenwellenlängen gibt, wobei sich im blauen Bereich des Lichtspektrums ein etwa kontinuierlicher breitbandiger Lichtverteilungsbereich 20 ergibt. Bei einer temperaturbedingten Verschiebung der Transmissionskurve verbleibt durch diesen etwa kontinuierlichen breitbandigen blauen Lichtverteilungsbereich 20 das Intensitätsverhältnis blauer zu gelbgrüner Spitzenwellenlänge und somit die weiße Lichtfarbe weitgehend unverändert.

Die ausgeprägte Spitzenwellenlänge 21 im roten Bereich des Lichtspektrums vermeidet zusätzlich eine Grünstichigkeit.

Als geeignet haben sich folgende Phosphorgemische erwiesen:
- Für blaues Licht:: Sr₅(PO₄) ₃CL: Eu
SrCaBa) ₅ (PO₄) ₃CL: Eu
BaMg₂ Al₁₆ O₂₇ : Eu
- Für grünes Licht:: LaPO₄ : Ce, Tb
(CeTb) MgAl₁₁ O₁₉
Zn₂ SiO₄ : Mg
- Für rotes Licht:: Y₂ O₃: Eu
CaSiO₃ : Pb, Mn

## Patentansprüche

1. Flüssigkristallanzeige zur Darstellung von hellen zeichen und Mustern in einem dunklen Umfeld, mit einer Lichtquelle (13), einer ersten Super-Twiste-Nematik-Zelle (STN) und einer zweiten Super-Twisted-Nematik-Zelle (STN), die aneinander anliegend zwischen zwei unter etwa 90° zueinander ausgerichteten Polarisatoren angeordnet sind, aus transparenten Substraten bestehen, zwischen denen mit einer STN - Flüssigkristallsubstanz gefüllte Zellenräume gebildet sind und die von ihrer einem Beobachter abgewandten Seite her von der Lichtquelle (13) durchleuchtbar sind, wobei die erste Super-Twisted-Nematik-Zelle auf ihren Substraten einander gegenüberliegende Elektroden (6, 7) aufweist, die von einer Ansteuerspannung beaufschlagbar sind und wobei die erste und zweite Super-Twisted-Nematic-Zelle eine Doppel-Super-Twisted-Nematic-Zelle bilden, die einen steilen Anstieg ihrer Transmissionskarve im blauen Bereich des Lichtspektrums besitzt, wobei die Elektroden (6, 7) von einer eine völlige Durchschaltung der Helix der Flüssigkristallsubstanz bewirkenden hohen Ansteuerspannung beaufschlagbar sind, **dadurch gekennzeichnet, daß** die Lichtquelle (13) eine weißes Licht mit einen erhöhten Blauanteil emittierende Lichtquelle (13) ist.

2. Flüssigkristallanzeige nach Anspruch 1, **dadurch gekennzeichnet, daß** die Lichtquelle (13) aus einer oder mehreren Lichtemissionsdioden (LED's) besteht.

3. Flüssigkristallanzeige nach einem der vorhergehenden Ansprüche, **dadurch gekennzeichnet, daß** die Ansteuerspannung variabel einstellbar ist.

4. Flüssigkristallanzeige nach Anspruch 3, **dadurch gekenntzeichnet,** daß die Ansteuerspannung manuell einstellbar ist.

5. Flüssigkristallanzeige nach Anspruch 3, **dadurch gekennzeichnet, daß** die Ansteuerspannung von einer Regeleinheit einstellbar ist, der ein Farbsignal eines die Farbe der dargestellten Zeichen und Muster erfassenden Sensors zuleitbar ist.

6. Flüssigkristallanzeige nach Anspruch 1, **dadurch gekennzeichnet , daß** die Lichtquelle eine ultraviolettes Licht emittierende Lichtemissionsdiode (LED) ist und eine Wellenlängenumwandlungseinrichtung zur Aufnahme und Umwandlung des Lichts der Lichtemissionsdiode in eine zusammengesetzte weiße Lichtstrahlung mit einer etwa kontinuierlichen, breitbandigen spektralen Lichtverteilung im blauen Bereich des Lichtspektrums aufweist.

7. Flüssigkristallanzeige nach Anspruch 6, **dadurch gekennzeichnet, daß** die Wellenlängenumwandlungseinrichtung ein erstes Fluoreszenzmaterial aufweist, das die Lichtstrahlung der Lichtemissionsdiode in eine zweite Lichtstrahlung
mit einer zweiten Spitzenwellenlänge in dem blauen Bereich des Lichtspektrums umwandelt und daß die Wellenlängenumwandlungseinrichtung zumindest ein weiteres Fluoreszenzmaterial aufweist, das die Lichtstrahlung der Lichtemissionsdiode in eine weitere Lichtstrahlung mit einer weiteren Spitzenwellenlänge in einem weiteren Bereich des blauen Bereichs des Lichtspektrums umwandelt, wobei die Spitzenwerte ersten und die weiteren Spitzenwellenlänge etwa gleiche Größe besitzen und die zusammengesetzte Lichtstrahlung durch die zweite und die weitere Lichtstrahlung gebildet ist.

8. Flüssigkristallanzeige nach Anspruch 7, **dadurch gekennzeichnet, daß** das erste Fluoreszenzmaterial aus einem ersten Phosphorgemisch und das weitere Fluoreszenzmaterial aus einem weiteren Phosphorgemisch gebildet ist.

9. Flüssigkristallanzeige nach Anspruch 8, **dadurch gekennzeichnet, daß** die Wellenlängenumwandlungseinrichtung ein aus einem dritten Phosphorgemisch gebildetes drittes Fluoreszenzmaterial aufweist.

10. Flüssigkristallanzeige nach Anspruch 9, **dadurch gekennzeichnet, daß** die zweite und/oder die weitere Lichtstrahlung breitbandig ist.

11. Flüssigkristallanzeige nach einem der vorhergehenden Ansprüche, **dadurch gekennzeichnet, daß** sowohl die Merkmale des Anspruchs 1 als auch die Merkmale des Anspruchs 6 vorhanden sind.

## Claims

1. Liquid crystal display for displaying bright characters and patterns in a dark background, having a light source (13) of a first super-twisted nematic cell (STN) and a second supertwisted nematic cell (STN), which are arranged adjoining one another between two polarisers aligned at approximately 90° to one another, consist of transparent substrates between which cell areas filled with an STN liquid crystal substance are formed, and which are transilluminated by the light source (13) from their side averted from an observer, the first supertwisted nematic cell having on its substrate mutually opposite electrodes (6, 7) to which a driving voltage can be applied, and the first and second super-twisted nematic cells forming a double super-twisted nematic cell which has a steep rise of its transmission curve in the blue region of the light spectrum, it being possible to apply to the electrodes (6, 7) a high driving voltage which effects a full switching of the helix of the liquid crystal substance, **characterized in that** the light source (13) is a light source (13) emitting a white light with an increased blue component.

2. Liquid crystal display according to Claim 1, **characterized in that** the light source (13) comprises one or more light emitting diodes (LEDs).

3. Liquid crystal display according to one of the preceding claims, **characterized in that** the driving voltage can be variably set.

4. Liquid crystal display according to Claim 3, **characterized in that** the driving voltage can be manually set.

5. Liquid crystal display according to Claim 3, **characterized in that** the driving voltage can be set by a control unit to which it is possible to supply a colour signal of a sensor which detects the colour of the characters and patterns displayed.

6. Liquid crystal display according to Claim 1, **characterized in that** the light source is a light emitting diode (LED) emitting ultraviolet light, and has a wavelength conversion device for receiving and converting the light from the light emitting diode into a combined white light radiation having an approximately continuous, broadband spectral light distribution in the blue region of the light spectrum.

7. Liquid crystal display according to Claim 6, **characterized in that** the wavelength conversion device has a first fluorescent material which converts the light radiation of the light emitting diode into a second light radiation with a second peak wavelength in the blue region of the light spectrum, and **in that** the wavelength conversion device has at least one further fluorescent material which converts the light radiation of the light emitting diode into a further light radiation with a further peak wavelength in a further region of the blue region of the light spectrum, the first peak wavelength and the further peak wavelength being of approximately the same magnitude, and the combined light radiation being formed by the second and the further light radiation.

8. Liquid crystal display according to Claim 7, **characterized in that** the first fluorescent material is formed from a first phosphor mixture, and the further fluorescent material is formed from a further phosphor mixture.

9. Liquid crystal display according to Claim 8, **characterized in that** the wavelength conversion device has a third fluorescent material formed from a third phosphor mixture.

10. Liquid crystal display according to Claim 9, **characterized in that** the second and/or the further light radiation is broadband.

11. Liquid crystal display according to one of the preceding claims, **characterized in that** both the features of Claim 1 and the features of Claim 6 are present.

## Revendications

1. Dispositif d'affichage à cristaux liquides pour représenter des signes et des motifs clairs dans un champ périphérique sombre, comprenant une source (13) lumineuse, une première cellule (STN) nématique supertwisted et une deuxième cellule (STN) nématique supertwisted, qui sont disposées l'une à côté de l'autre entre deux polariseurs dirigés à environ 90° l'un par rapport à l'autre, qui sont constituées de substrats transparents, entre lesquels sont formés des espaces de cellule emplis d'une substance de cristal liquide (STN), et qui peuvent être éclairées par transparence de leur côté éloigné d'un observateur par la source (13) lumineuse, la première cellule nématique supertwisted ayant, sur son substrat, des électrodes (6, 7) opposées l'une à l'autre, auxquelles peut être appliquée une tension de commande, et les première et deuxième cellules nématique supertwisted forment une cellule nématique supertwisted double, qui a une pente abrupte de sa courbe de transmission dans le domaine bleu du spectre de la lumière, une tension de commande haute provoquant une connexion complète de l'hélice de la substance de cristal liquide pouvant être appliquée aux électrodes (6, 7), **caractérisé en ce que** la source (13) lumineuse est une source (13) lumineuse émettant de la lumière blanche ayant une composante de bleu accentuée.

2. Dispositif d'affichage à cristaux liquides suivant la revendication 1, **caractérisé en ce que** la source (13) lumineuse est constituée d'une ou de plusieurs diodes électroluminescentes (DEL).

3. Dispositif d'affichage à cristaux liquides suivant l'une des revendications précédentes, **caractérisé en ce que** la tension de commande peut être réglée de manière variable.

4. Dispositif d'affichage à cristaux liquides suivant la revendication 3, **caractérisé en ce que** la tension de commande peut être réglée manuellement.

5. Dispositif d'affichage à cristaux liquides suivant la revendication 3, **caractérisé en ce que** la tension de commande peut être réglée par une unité de régulation, à laquelle peut être envoyé un signal de couleur d'un capteur détectant la couleur des signes et motifs représentés.

6. Dispositif d'affichage à cristaux liquides suivant la revendication 1, **caractérisé en ce que** la source lumineuse est une diode (DEL) électroluminescente émettant une lumière ultraviolette et a un dispositif de transformation des longueurs d'onde pour la réception et la transformation de la lumière de la diode électroluminescente en un faisceau lumineux blanc composé, ayant une répartition spectrale de la lumière continue et à bande large dans le domaine bleu du spectre de la lumière.

7. Dispositif d'affichage à cristaux liquides suivant la revendication 6, **caractérisé en ce que** le dispositif de transformation des longueurs d'onde a une première matière de fluorescence, qui transforme le rayonnement lumineux de la diode électroluminescente en un deuxième rayonnement lumineux ayant une deuxième longueur d'onde de crête dans le domaine bleu du spectre de la lumière, et **en ce que** le dispositif de transformation des longueurs d'onde a au moins une autre matière de fluorescence, qui transforme le rayonnement lumineux de la diode électroluminescente en un autre rayonnement lumineux ayant une autre longueur d'onde de crête dans un autre domaine du domaine bleu du spectre de la lumière, les valeurs de crête de la première et des autres longueurs d'onde de crête étant à peu près égales et le rayonnement lumineux composé est formé par le deuxième et l'autre rayonnement lumineux.

8. Dispositif d'affichage à cristaux liquides suivant la revendication 7, **caractérisé en ce que** la première matière de fluorescence est formée d'un premier mélange de substances luminescentes et l'autre matière de fluorescence est formée d'un autre mélange de substances luminescentes.

9. Dispositif d'affichage à cristaux liquides suivant la revendication 8, **caractérisé en ce que** le dispositif de transformation des longueurs d'onde a une troisième matière de fluorescence formée d'un troisième mélange de substances luminescentes.

10. Dispositif d'affichage à cristaux liquides suivant la revendication 9, **caractérisé en ce que** le deuxième et/ou l'autre rayonnement lumineux est à bande large.

11. Dispositif d'affichage à cristaux liquides suivant l'une des revendications précédentes, **caractérisé en ce qu'**à la fois les caractéristiques de la revendication 1 et celles de la revendication 6 sont présentes.
